(19) Europäisches Patentamt

European Patent Office

Office européen des brevets

(11) Veröffentlichungsnummer: **0 234 531**
**A2**

# (12) EUROPÄISCHE PATENTANMELDUNG

(21) Anmeldenummer: **87102461.8**

(22) Anmeldetag: **21.02.87**

(51) Int. Cl.⁴ **F16J 10/02**

(30) Priorität: **28.02.86 DE 3606541**

(43) Veröffentlichungstag der Anmeldung:
**02.09.87 Patentblatt 87/36**

(84) Benannte Vertragsstaaten:
**CH FR GB IT LI SE**

(71) Anmelder: **SCHOTT RUHRGLAS GMBH**
**Postfach 1180**
**D-8596 Mitterteich(DE)**

(72) Erfinder: **Männl, Reinhard**
**Hofstattstrasse 7**
**D-8596 Mitterteich(DE)**
Erfinder: **Lüneberg, Hartmut, Dr.**
**Erbstrasse 13**
**D-8590 Marktredwitz(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Büro Dr. J. Rasper Bierstadter Höhe 22**
**D-6200 Wiesbaden(DE)**

(54) **Bewegungszylinder mit einem Zylindergehäuse aus Glas.**

(57) Bei einem Bewegungszylinder mit einem Zylindergehäuse aus Glas besteht dieses Zylindergehäuse aus einem normalen oder einem vorgespannten Glasrohr, wobei das Zylindergehäuse außen mit einem transparenten Kunststoff beschichtet, mit einem Drahtgitter ummantelt oder sandwichartig mit einer Schichtenfolge aus Kunststoff und Metall umhüllt sein kann, wodurch die Festigkeit des Glaszylindergehäuses jeweils erheblich erhöht wird.

EP 0 234 531 A2

## Bewegungszylinder mit einem Zylindergehäuse aus Glas

Die Erfindung betrifft einen neuartigen Bewegungszylinder.

Bewegungszylinder (pneumatische oder hydraulische) werden in großer Zahl an Maschinen eingesetzt, um bestimmte Arbeitsgänge durchzuführen. Die herkömmlichen Bewegungszylinder bestehen aus einem zylindrischen Rohr aus Metall, insbesondere aus Stahl, in dem der Kolben, der auf der aus dem Rohr herausführenden Kolbenstange sitzt, auf und ab gleitet, wobei das Zylinderinnere gegen das Äußere flüssigkeits-bzw. gasdicht abgedichtet ist, und wobei ein Schmiermittel den Reibungswiderstand zwischen dem Kolben und der Rohrinnenoberfläche vermindert. Der Kolben kann ebenfalls aus Metall, jedoch auch aus Kunststoff oder einem anderen geeigneten Material bestehen.

Diese herkömmlichen Zylinder haben verschiedene Nachteile:

-Der Metallzylinder ist gegen viele aggressive Medien nicht korrosionsbeständig;

-Durch den in manchen Fällen hohen Reibungswiderstand zwischen Kolben und Rohrinnenwand tritt unerwünscht starker Verschleiß auf;

-Der Zylinder ist undurchsichtig; dadurch kann der Kolben nicht beobachtet werden, und es können insbesondere die gegebenenfalls vorgesehenen, den Kolbenhub begrenzenden Endschalter nicht positioniert werden;

-Es können keine Eichmarkierungen für den Kolbenhub angebracht werden;

-Der Zylinder ist nicht elektrisch isoliert, und

-Die herkömmlichen Zylinder zeigen den sogenannten stick-slip-Effekt, d.h., der Kolben haftet bei Stillstand relativ fest am Rohr, beispielsweise bei der Hubumkehr, so daß für seine Weiterbewegung eine unverhältnismäßig große Kraft aufgewandt werden muß.

Ziel der vorliegenden Erfindung ist ein Bewegungszylinder, der sämtliche vorstehend aufgeführten Nachteile vermeidet. Dieses Ziel wird mit einem Zylinder gemäß den Patentansprüchen erreicht.

Es war außerordentlich überraschend, festzustellen, daß ein Glasrohr als Gehäuse für einen Bewegungszylinder eingesetzt werden kann. Die gesamte Fachwelt war nämlich der Meinung, daß ein Glasrohr nicht die geforderte Festigkeit bringen würde und daß es insbesondere unmöglich sei, die von Metallzylindern bekannte, exakte Zylindergestalt (Rundheit) an Glasrohren zu realisieren.

Der erfindungsgemäß zu verwendende Glaszylinder kann in verschiedenen Ausführungsformen verwirklicht werden:

### 1. Normales Glasrohr

Ein an einer herkömmlichen Glasrohrfertigungsanlage und aus einer üblichen Glaszusammensetzung produziertes Glasrohr kann nach ausreichender (thermischer) Entspannung als das Gehäuse eines Bewegungszylinders verwendet werden. Jedes bekannte Rohrzieh-, -preß-, -guß- oder -schleuderverfahren kann zur Herstellung des Glaszylinders Verwendung finden, und jede beliebige, geeignete Spezialglaszusammensetzung kann eingesetzt werden.

### 2. Vorgespanntes Glasrohr

Das zu verwendende Glasrohr kann nach bekannten Härtungsverfahren, d.h. durch Erhitzen mit anschließendem Abschrecken thermisch vorgespannt werden. Die dabei erzielbare Druckvorspannung (und damit Festigkeitserhöhung) kann z.B. bei einer herkömmlichen Glasrohrzusammensetzung das 6-fache und z.B. bei einer Borosilkatglaszusammensetzung das 4 bis 5-fache des Ausgangswertes ausmachen.

### 3. Kunststoffbeschichtetes Glasrohr

Das zu verwendende Glasrohr kann nach geeigneten Verfahren, wie sie aus der Beschichtungstechnik bekannt sind, mit einer Schicht aus druchsichtigem oder, wenn es auf Durchsichtigkeit nicht ankommt, aus durchscheinendem oder optisch dichtem Kunststoff überzogen werden. Dadurch erhöht sich die Festigkeit des Glaszylinders erheblich.

### 4. Mit Drahtgitter ummanteltes Glasrohr

Das zu verwendende Glasrohr kann, wie es auch von anderen Hohlglasgegenständen bekannt ist, mit einem Drahtgitter oder -gewebe ummantelt werden. Auch hierdurch erhöht sich die Bruchfestigkeit des Glaszylinders.

5. <u>Mit</u> <u>Kunststoff</u> <u>und</u> <u>Metall</u> <u>beschichtetes</u> <u>Glasrohr</u>

Das zu verwendende Glasrohr kann sandwichartig mit einer Schichtenfolge aus Kunststoff und Metall umhüllt sein, wobei die Metallschicht z.B. durch Elektroplattierung aufgebracht werden kann. Hierdurch wird die Festigkeit des Glaszylinders in besonders starkem Maße erhöht.

Die Zylindergehäuse aus Glas gemäß der Erfindung weisen u.a. folgende Vorteile auf:
-Sie sind korrosionsbeständiger als z.B. Metallzylinder;
-sie besitzen eine weit geringere Rauhtiefe als Metallzylinder, insbesondere wenn sie feuerpoliert sind, wodurch sich ein bis dahin unerreichter, niedriger Reibwert und ein ebenfalls bisher unerreicht geringer Verschleiß ergibt;
-sie zeigen eine außerordentlich gute Dauerstandsfestigkeit;
-Dank der Durchsichtigkeit der Glaszylinder sind Positionseinstellungen mit Hilfe von Endschaltern möglich, wobei auch bekannte berührungslose Endschalter (induktive, kapazitive, optische) verwendet werden können; Eichmarkierungen können angebracht werden;
-sie sind gegenüber anliegenden Maschinenteilen elektrisch isoliert;
-bei geeigneter Wahl des Materials für den Kolben kann jede Schmierung entfallen;
-bei geeigneter Wahl des Materials für den Kolben tritt kein stick-slip-Effekt auf.

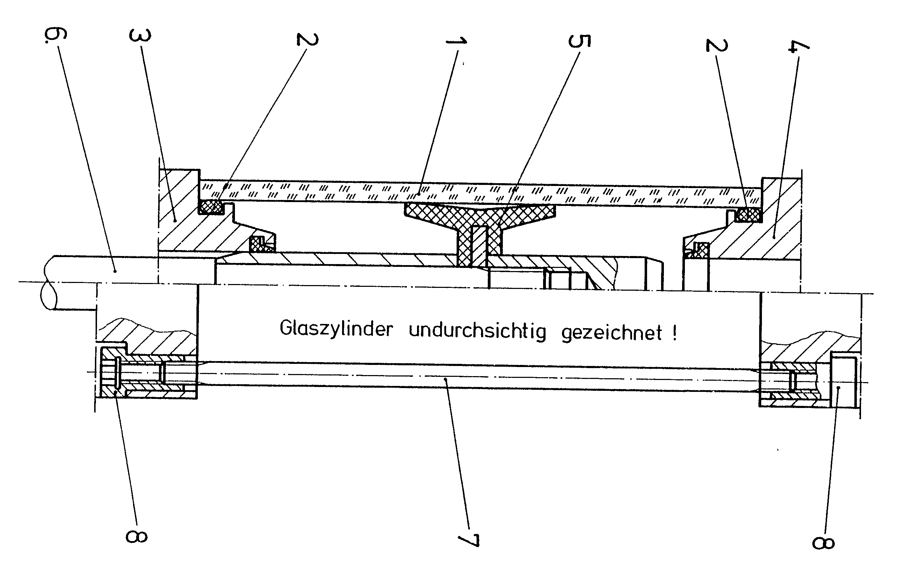

In der Zeichnung ist ein Bewegungszylinder gemäß der Erfindung dargestellt.

Ein zwischen vier Zuganker 7 mit Spannschrauben 8 gehalterter Bewegungszylinder besteht aus einem Glaszylinderrohr 1, in welchem ein auf einer Kolbenstange 6 sitzender Kunststoffkolben 5 läuft, und aus den Zylinderdeckeln 3 und 4, die durch O-Ringe 2 gegen das Gehäuse abgedichtet sind.

**Ansprüche**

1. Bewegungszylinder, dadurch gekennzeichnet, daß sein Zylindergehäuse aus Glas besteht.
2. Zylinder nach Anspruch 1, dadurch gekennzeichnet, daß das Zylindergehäuse aus einem vorgespannten Glasrohr besteht.
3. Zylinder nach Anspruch 1 oder 2, dadurch gekennzeichnet, daß das Zylindergehäuse außen mit einem transparenten Kunststoff beschichtet ist.
4. Zylinder nach Anspruch 1 oder 2, dadurch gekennzeichnet, daß das Zylindergehäuse mit einem Drahtgitter ummantelt ist.

5. Zylinder nach Anspruch 1 oder 2, dadurch gekennzeichnet, daß das Zylindergehäuse mit einer Schichtenfolge aus Kunststoff und Metall ummantelt ist.

Glaszylinder undurchsichtig gezeichnet !